# EUROPEAN PATENT APPLICATION

(11) **EP 0 851 616 A1**
(43) Date of publication of application: **01.07.1998**
(21) Application number: 97850135.1
(22) Date of filing: 07.10.1997
(51) Int. Cl.: H04B 10/17

(54) **Reliable optical network**

(30) Priority: 08.10.1996 SE 9603673
(71) Applicant: TELEFONAKTIEBOLAGET LM ERICSSON, 126 25 Stockholm (SE)
(72) Inventor: Bonnedal, Dag, 122 37 Enskede (SE); Egnell, Lars, 133 37 Saltsjöbaden (SE); Sandell, Jan, 122 62 Enskede (SE); Sundelin, Magnus, 113 33 Stockholm (SE)
(74) Representative: Holmgren, Hans Gunnar

(57) **Abstract**

The present invention relates to an apparatus and a method, for increasing the reliability and to reduce the cost in an optical WDM-network. By using one laser pump (103, 108) for both incoming and outgoing optical amplifier, (104, 105, 109, 111) the reliability is increased and the cost is reduced. If the laser pump fails, a cable protection mechanism (120) is activated. By using only one laser pump, the fault situation is a simple one for the cable protection, which redirects the traffic to another pair of fibres.

## Description

### Technical Area

The present invention relates to an apparatus and a method, for increasing the reliability, and reduce the cost in an optical WDM-network.

### Prior Art

The reliability of the telecommunication network of today is one of its most important properties. It is of utmost importance for the operators of the telecommunication network, to be able to achieve a network, which shows enough dependability, and has high reliability. At the same time are the operators placed in a competition situation which naturally leads to a drive to reduce the costs in the building of the networks. The problems of, at the same time achieving high reliability, and to achieve reduced costs for a telecommunication network are often in conflict with each other, and to be able find solutions which both gives high reliability and low cost is therefore highly desirable.

EP 532 230 describes an optical amplifier with a surplus of laser pumps. Through, for instance EP 532 230 it is known to use several laser pumps, which are connected so that they together supply two optical amplifiers with pump light. If one laser pump breaks down the other one can take over the responsibility and thereby achieving an increased reliability. By sharing two laser pumps between two optical amplifiers, instead to use two laser pumps for each amplifier, one also reduces costs.

IEEE Photonic Technology Letters, Vol. 4, No. 8 August 1992 pages 911-913 describes the use of one laser pump for amplifying optical signals in an bi-directional fibre. The design and optimisation of optical amplifiers in bi-directional fibres concerns questions of issue, which are not applicable for the solution described in this paper. The solution described above is not applicable in the case with uni-directional fibres as well as the present invention is not applicable in the case with bi-directional fibres.

The above mentioned publications describes how to efficiently use optical amplifiers and laser pumps in an efficient way. The publications, however, do not concern the special problems, which arises in building optical networks.

Another technical area, which the present invention concerns, is methods for cable protection.

### Summary of the invention

The invention solves the above mentioned problem, to achieve an efficient and cheap optical network, through the combined use of only one laser pump for both optical amplifiers for incoming and outgoing traffic and the use of a cable protection scheme.

The purpose with the present invention is to achieve an optical network with high reliability, at a low cost.

By using one laser pump for both incoming and outgoing optical amplifier the reliability is increased and the costs are reduce. If the laser pump fails a cable protection mechanism activates. By using only one laser pump, it will be a simple fault situation for the cable protection mechanism, which will redirect the traffic to another pair of fibres.

At least one pair of fibres is used for traffic between a first node and a second node. A first fibre, in the pair of fibres, is used for traffic from the first node to the second node, and a second fibre is used for traffic from the second node to the first node. Further more, there is in the network at least a third node, which in a similar way is connected with the first and the second node. Alternatively is there at least a spare pair of fibres between the first and the second node. Thus is to every node, at least two pair of fibres connected, each with one fibre for outgoing traffic and one fibre for incoming traffic.

At the first node, is an optical power amplifier located on the first fibre, in each pair of fibres, and an optical pre-amplifier on the second fibre, in each pair of fibres. Both of these amplifiers are feed by a common laser pump. The corresponding arrangement exists also at the second node for both of the pairs of fibres, as well as in a similar way for the third node. Furthermore there exists in the nodes, or alternatively in the network, a mechanism for cable protection.

The cable protection is working such that when a node finds that the communication with another node is not working, the node, or the network, chooses another route for the traffic. If, for instance, the traffic between the first and the second node is stopped by a cable break, the first node will send traffic, which is aimed for the second node, on the alternative route.

It is enough for one of the fibres in a pair of fibres to malfunction for a duplex connection between two nodes to be regarded as broken. This means that a protection-switch, within the scope of the protection mechanism, will be executed even if only one of the fibres in a pair of fibres is not working. If only one direction ceases to function, it is a more complex fault situation than if both directions simultaneously would break. The reason for this is that one of the nodes can continue to regard the connection as intact while the other node regards the connection as broken.

In an optical amplifier, the laser pump has the highest fault probability. A fault in the laser pump means that the amplifier ceases to function and thereby breaking the connection.

By only using one laser pump to both of the amplifiers, the reliability is increased compared to using one laser pump for each amplifier, since it, according to the above, is enough if one of these breaks for the connection to be regarded as broken. The probability that two components with the fault intensity λ both are working are, as are well known, less than the probability that one component with the fault intensity λ is working. By activation of the cable protection when the laser pump fails, one achieves a more reliable and cheaper solution, where one also avoids a more complex fault situation.

One advantage with the present invention is that one increases the reliability on the connection to which the amplifiers is used and thereby on the complete network.

Another advantage is that one reduces the costs for laser pumps, which are a significant part of the cost for an optical amplifier.

The invention will now be described in more detail with the aid of preferred embodiments and with reference to the drawings.

### Description of the drawings

Figure 1 shows an optical network with three nodes.

Figure 2 shows schematically a network with 8 nodes.

Figure 3 shows a line amplifier.

### Preferred Embodiments

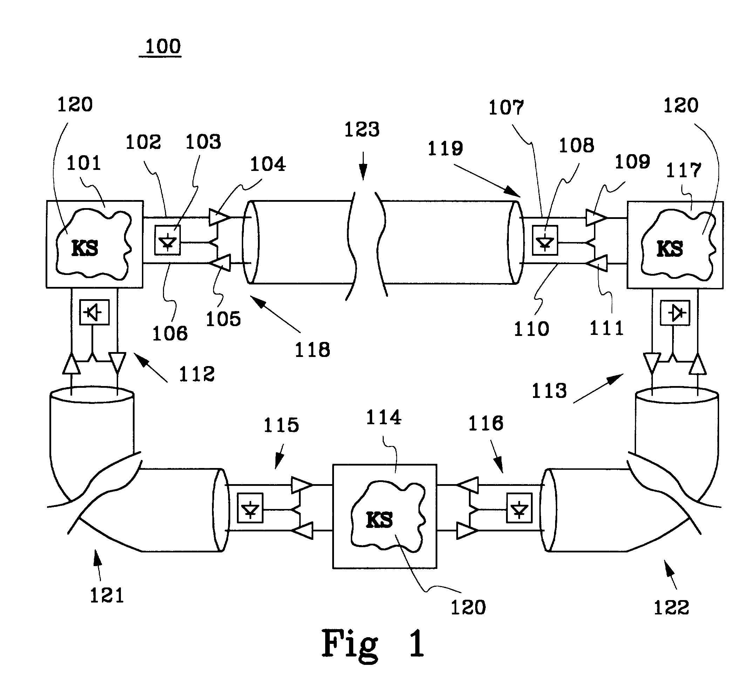

Figure 1 shows a network, denoted 100, in a preferred embodiment according to the invention. With 101 is a node denoted, which has an optical fibre, for outgoing traffic, denoted 102, and an optical fibre for incoming traffic denoted 106. With 104 is an optical power amplifier denoted, which amplifies the signal on the outgoing fibre 102. With 105 is an optical pre-amplifier denoted, which amplifies the signal on the incoming fibre 106. The power amplifier 104 and the pre-amplifier 105 is operated with a common laser pump denoted 103. In the figure is only one laser pump shown, but there can also be two or several laser pumps, which together feeds the amplifiers with light. If one of the lasers fail, the power from the remaining lasers is enough to operate the amplifiers. With 118 is an amplifier, comprising the parts 103, 104 and 105, denoted. Traffic is conveyed on the first fibre 102 to a node 117. The node 117 receives the traffic from node 101 on the fibre 107. Via the fibre, 110 traffic from the node 117 is conveyed to the node 101, which receives the traffic on fibre 106. With 109 is an optical pre-amplifier denoted, which amplifies signals received on the fibre 107. With 111 is an optical power amplifier denoted, which amplifies signals, which shall be sent on the fibre 110. The pre-amplifier 109 and the power amplifier 111 are operated by a common laser pump 108. With 119 is an amplifier denoted which comprises the parts 108, 109, 111. On a similar way is the node 101 connected with a node 114 through the amplifiers 112 and 115, and the node 117 connected with the node 114 via the amplifiers 113 and 116. With 121 is a connection between the node 101 and the node 114 denoted. The connection 121 comprises the amplifiers 112 and 115. With 122 is a connection between the node 117 and the node 114 denoted. The connection 122 comprises the amplifiers 113 and 116. With 123 is a connection between the node 101 and the node 117 denoted. The connection 123 comprises the amplifiers 118 and 119.

In the nodes 101, 117 and 114 is a cable protection mechanism, KS denoted 120 located. The cable protection detects the status on the connections 121, 122 and 123 and takes decision about which routes to use for traffic in the network. In the present preferred embodiment, the network 100 is of the type flex-bus. This means that only the connections 121 and 122 are used for all traffic. The connection 123 is turned off and is not used for traffic. This can be achieved, for instance, by turning off he laser pumps 103 and 108. Thereby is a buss-structure achieved in a ring-net where the nodes 101 and 117 acts as end-nodes. If the connection 122 should be broken for any reason, for instance by construction work, like digging, or a fault in any of the amplifiers 113 or 116 the connection 123 will be started by the cable protection mechanism 120. This means that we again achieves a complete buss-structure between the nodes 101, 114, and 117, though now the nodes 114 and 117 acts as end-nodes. This method is called flex-bus, flexible buss-structure.

In another preferred embodiment, traffic occurs between all nodes in the network. The dimensioning of the capacity of the fibres, though has been done in such way that the connection 121, between the node 101 and the node 114, and the connection 122 between the node 114 and the node 117, manage to handle also the traffic which usually goes via the connection 123. This means that if the connection 123 would break the traffic between the node 101 and the node 117 can be conveyed via the connection 121 through the node 114, to the node 117 via the connection 122. On a similar way can the connections 123 and 122 carry the traffic on the connection 121, and the connections 123 and 121 can carry the traffic on the connection 122. The cable protection mechanism 120 handles the logic for routing the traffic via an alternative route if any connection should be broken.

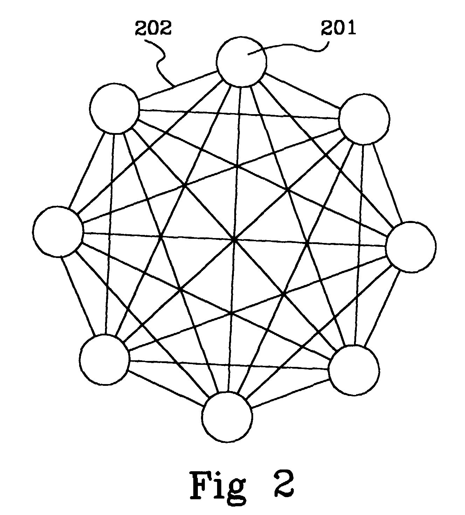

Figure 2 shows a network with eight nodes, all connected with each other. With 201 is a node denoted and with 202 a connection between two nodes. In this preferred embodiment, the cable protection, in case of a broken connection, choose any of the six remaining nodes to convey the traffic trough. How this choice is performed can be made more or less complex, for instance can a simple list be used or, for instance, measurements of the load of the network can be used.

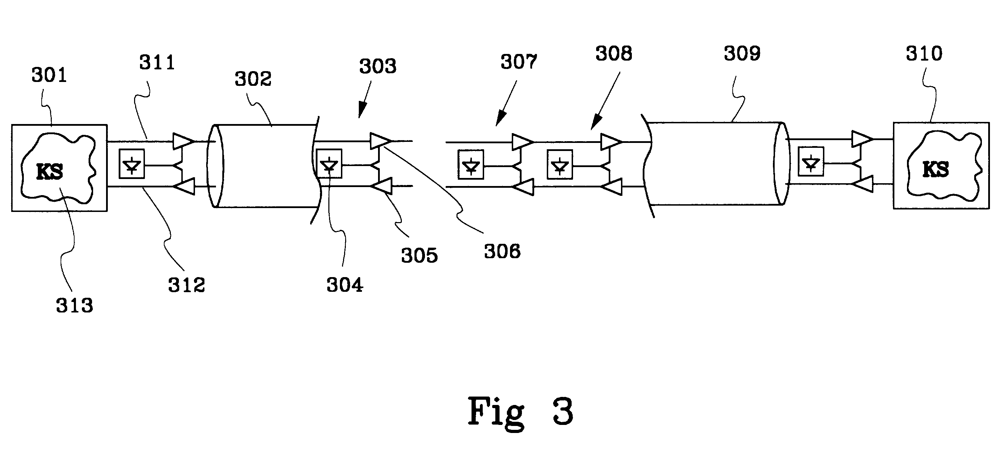

In figure 3 is a line amplifier shown which is used to amplify signals carried over a longer distance. With 301 is a node denoted, which sends information to a node 310 over the connection 302 and 309. The distance between the nodes is, however, so long that the attenuation of the signal is too large wherefore an amplification of the signal must be performed. With 303 is an amplifier denoted. The amplifier 303 comprises two part-amplifiers, 305 and 306, which are used to amplify the signals in each direction. A laser pump 304 operates the part-amplifiers, 305 and 306. With 311 is an optical fibre denoted, which conveys signals from the node 301. With 312 is an optical fibre denoted, which conveys signals from the node 310 to the node 301. With 307 and 308 are more amplifiers denoted, which are connected in series with each other and with the amplifier 303. In figure 3 is only three amplifiers in series shown, but there can of course be more or less in other embodiments. If the laser pump 304 fails the cable protection 313 is activated and the traffic is connected through another connection (not shown in figure 3).

The invention is of course not limited to the above described, and on the drawings shown embodiments, but can be modified within the scope of the attached claims.

## Claims

1. An apparatus for increasing the reliability in an optical network (100) comprising, at least, a first and a second optical connection (121, 123; 302), which conveys signals, where said first optical connection comprises, at least a first and a second optical fibre (102, 106; 311, 312), and, at least a first and a second optical amplifier (104, 105; 305, 306), CHARACTERISED in at least one optical laser pump (103; 304), arranged to supply the first and second optical amplifier with laser pump light, and a cable protection (120, 313) arranged to connect the signals through the second optical connection (121), in dependence of if the first optical connection breaks.

2. An apparatus according to claim 1, CHARACTERISED in that the first optical fibre (102; 311) is arranged to send signals in a first direction, that the second optical fibre (106, 312) is arranged to send signals in a second direction, opposite to the first direction, that the first optical amplifier (104, 306) is arranged to amplify signals on the first optical fibre, and that the second optical amplifier (105; 305) is arranged to amplify signals on the second optical fibre.

3. An apparatus according to claim 1, CHARACTERISED in at least a second laser pump, arranged to supply the first and the second optical amplifier with laser pump light, connected in series with said first laser pump.

4. An apparatus according to claim 1, CHARACTERISED in that said first optical connection (123, 302) is connected with a first node (101; 301), and that said second optical connection (121) is connected with said first node.

5. An apparatus according to claim 4, CHARACTERISED in that said first connection (123; 302) connects said first node (101, 301) with a second node (117; 310), and that said second connection (121) connects said first node with said second node via another physical route in the network.

6. An apparatus according to claim 5, CHARACTERISED in that said second connection (121) goes through, at least a third node (117), and that said second optical connection is of the same type as said first optical connection.

7. An apparatus according to claim 1, CHARACTERISED in that said first optical connection (302) is connected with a third optical connection (309), and that said third optical connection is of the same type as said first optical connection.

8. A method for increasing the reliability in an optical network, CHARACTERISED in that a first node (101; 301) is sending signals via a first optical fibre (102, 107; 311) to a second node (117; 310), that said second node is sending signals to said first node via a second optical fibre (106, 110; 312), that said signals, in each direction, first is amplified by a power amplifier (104, 111) and then by a pre-amplifier (105, 109), that an optical source (103, 108) operates the pre-amplifier on the first optical fibre and the power amplifier on the second optical fibre, that the signals is conveyed from said first node to said second node, via an alternative route, in dependence of if the cable protection (120) in the first or the second node, detects a fault in the transmission of signals from said first node to said second node, and that the signals is transmitted via an alternative route, in dependence of if the cable protection in the first or in the second node, detects a fault in the transmission of signals from said second node to said first node.
